(19) **European Patent Office**
Europäisches Patentamt
European Patent Office
Office européen des brevets

(11) **EP 4 723 198 A1**

(12) **EUROPEAN PATENT APPLICATION**
published in accordance with Art. 153(4) EPC

(43) Date of publication:
08.04.2026 Bulletin 2026/15

(21) Application number: 24815520.2

(22) Date of filing: 29.05.2024

(51) International Patent Classification (IPC):
$H01M\ 4/131^{(2010.01)}$    $H01M\ 4/36^{(2006.01)}$
$H01M\ 4/62^{(2006.01)}$    $H01M\ 4/505^{(2010.01)}$
$H01M\ 4/525^{(2010.01)}$    $H01M\ 10/052^{(2010.01)}$
$H01M\ 10/0566^{(2010.01)}$

(52) Cooperative Patent Classification (CPC):
Y02E 60/10

(86) International application number:
PCT/JP2024/019703

(87) International publication number:
WO 2024/248039 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 JP 2023090332

(71) Applicant: Panasonic Intellectual Property
Management Co., Ltd.
Kadoma-shi, Osaka 571-0057 (JP)

(72) Inventors:
• FUKAMICHI, Noriko
Kadoma-shi, Osaka 571-0057 (JP)
• UKA, Youichirou
Kadoma-shi, Osaka 571-0057 (JP)

(74) Representative: Novagraaf International SA
Chemin de l'Echo 3
1213 Onex, Geneva (CH)

(54) **POSITIVE ELECTRODE FOR SECONDARY BATTERY, AND SECONDARY BATTERY**

(57) A positive electrode for secondary batteries includes a positive electrode current collector, and a positive electrode mixture layer disposed on a surface of the positive electrode current collector. The positive electrode mixture layer contains a positive electrode active material, a carbon conductive agent, and a dispersant. The positive electrode active material includes a first metal composite oxide having a first particle size distribution, and a second composite metal oxide having a second particle size distribution. A volume-based median diameter D1 of the first metal composite oxide and a volume-based median diameter D2 of the second metal composite oxide satisfy D1 > D2. The dispersant includes a nitrile group-containing rubber.

FIG. 1

EP 4 723 198 A1

**Description**

[Cross Reference to Related Application]

The present disclosure claims priority with respect to the Japanese Patent Application No. 2023-090332 filed on May 31, 2023, and the entire content of the patent application is incorporated herein by reference into the present specification.

[Technical Field]

The present disclosure relates to a positive electrode for secondary batteries, and a secondary battery.

[Background Art]

Patent Literature proposes "a positive electrode active material for lithium batteries, comprising: a lithium-nickel composite oxide having a volumetric particle distribution of $3.0\ \mu m \leq D25 \leq 10.0\ \mu m$, $5.0\ \mu m \leq D50 \leq 20.0\ \mu m$, and $10.0\ \mu m \leq D75 \leq 25.0\ \mu m$, as measured with particle size analyzer; and a second lithium-nickel composite oxide having a volumetric particle distribution of $0.01\ \mu m \leq D25 \leq 5.0\ \mu m$, $1.0\ \mu m \leq D50 \leq 10.0\ \mu m$, and $5.0\ \mu m \leq D75 \leq 15.0\ \mu m$, as measured with particle size analyzer, wherein: the first lithium-nickel composite oxide has a higher nickel atom content, which is a ratio of nickel atoms in a chemical formula, than the second lithium-nickel composite oxide; the first lithium-nickel composite oxide is contained in an amount of 80 to 97 wt%, and the second lithium-nickel composite oxide is contained in an amount of 3 to 20 wt%, relative to a total weight of the positive electrode active material; the first lithium-nickel composite oxide has a volumetric particle distribution of $5.0\ \mu m \leq D25 \leq 9.0\ \mu m$, $8.0\ \mu m \leq D50 \leq 13.0\ \mu m$, and $13.0\ \mu m \leq D75 \leq 18.0\ \mu m$; and the second lithium-nickel composite oxide has a volumetric particle distribution of $1.0\ \mu m \leq D25 \leq 3.0\ \mu m$, $2.0\ \mu m \leq D50 \leq 7.0\ \mu m$, and $6.0\ \mu m \leq D75 \leq 10.0\ \mu m$".

[Citation List]

[Patent Literature]

Patent Literature 1: Japanese Patent No. 5868604

[Summary of Invention]

[Technical Problem]

In order to increase the capacity of a secondary battery, studies have been made on filling the gaps between large-sized active material particles with small-sized active material particles in the positive electrode mixture layer. However, simply by mixing active material particles differing in their particle size together, the dispersibility of the positive electrode mixture is reduced, and the conductive paths fail to be well-formed, which, on the contrary, may cause the capacity to decrease. Especially in the case where the mass of the positive electrode mixture layer supported on the positive electrode current collector per unit area is large, in the production process of the positive electrode mixture layer, when drying a positive electrode slurry in which the positive electrode mixture is dispersed in a liquid component (dispersion medium), the distribution of auxiliary agent tends to be non-uniform, resulting in a significant decrease in capacity. Therefore, the dispersibility of the positive electrode mixture is important.

[Solution to Problem]

One aspect of the present disclosure relates to a positive electrode for secondary batteries, including: a positive electrode current collector; and a positive electrode mixture layer disposed on a surface of the positive electrode current collector, wherein the positive electrode mixture layer contains a positive electrode active material, a carbon conductive agent, and a dispersant, the positive electrode active material includes a first metal composite oxide having a first particle size distribution, and a second composite metal oxide having a second particle size distribution, a volume-based median diameter D1 of the first metal composite oxide and a volume-based median diameter D2 of the second metal composite oxide satisfy D1 > D2, a compressive strength F1 of particles of the first metal composite oxide and a compressive strength F2 of particles of the second composite oxide satisfy F1 < F2, and the dispersant includes a nitrile group-containing rubber.

Another aspect of the present disclosure relates to a secondary battery, including: the above-described positive electrode for secondary batteries; a separator; a negative electrode facing the positive electrode with the separator interposed between the positive electrode and the negative electrode; and an electrolyte solution.

[Advantageous Effects of Invention]

According to the present disclosure, it is possible to obtain a high-capacity positive electrode for secondary batteries by improving the dispersibility of the positive electrode mixture.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawing]

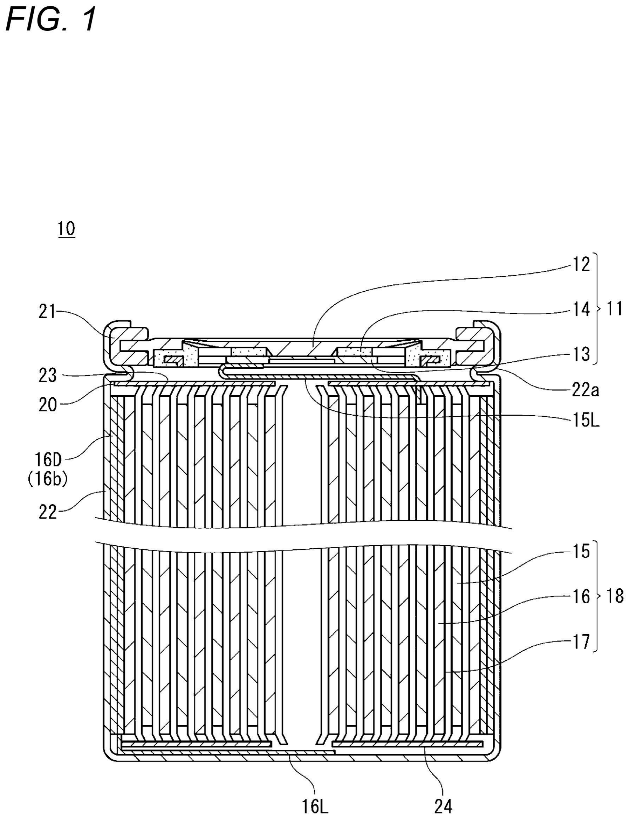

[FIG. 1] A schematic longitudinal sectional view of a secondary battery according to one embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. In the following description, when examples of components and examples of methods are mentioned, unless otherwise specified, one of the mentioned examples may be used alone, or two or more of the mentioned examples may be used in combination.

(Positive electrode for secondary batteries)

A positive electrode (hereinafter may be referred to as a "positive electrode (P)") according to the present embodiment is a positive electrode used in secondary batteries such as nonaqueous electrolyte secondary batteries. The positive electrode (P) includes a positive electrode current collector and a positive electrode mixture layer. The positive electrode mixture layer is disposed on a surface of the positive electrode current collector. The positive electrode mixture layer is constituted of a positive electrode mixture containing a positive electrode active material, a carbon conductive agent, and a dispersant.

The positive electrode active material includes a first metal composite oxide having a first particle size distribution, and a second composite metal oxide having a second particle size distribution. A volume-based median diameter D1 of the first metal composite oxide and a volume-based median diameter D2 of the second metal composite oxide satisfy D1 > D2. That is, the first metal composite oxide constitutes large-sized active material particles, and the second metal composite oxide constitutes small-sized active material particles.

One known method for achieving high capacity of a secondary battery is to raise the charge voltage. However, when the active material particles are continuously exposed to a high charge voltage, the particles will crack, and side reactions, such as gas generation and leaching of metals from grain boundaries, will occur, which reduces the durability.

On the other hand, when a mixture of the large-sized active material particles and the small-sized active material particles is packed into the positive electrode mixture layer, the small-sized active material particles can enter and fill the gaps between the large-sized active material particles. Therefore, the gaps in the positive electrode mixture layer are reduced, leading to increased content ratio of the positive electrode active material. In principle, the capacity of the secondary battery can be increased in this way.

However, if the dispersion of the mixture of active material particles is not uniform, the content ratio of the positive electrode active material in the positive electrode mixture layer cannot be sufficiently increased, and moreover, the conductive paths are not well-formed, which may rather result in decreased capacity in some cases. In addition, regions having different physical properties may be formed locally in the positive electrode mixture layer, and the performance of the positive electrode will deteriorate. For example, regions with high reactivity and those with low reactivity may be formed locally. A difference is caused also in the degree of migration of electrolyte solution. As a result, the resistance of the positive electrode mixture layer increases. Furthermore, the potential of the positive electrode (P) will vary depending on the regions (variations will occur in the potential). When variations of the potential occur in the positive electrode (P), the amount of gas generated by side reactions will increase.

In the production process of the positive electrode mixture layer, a positive electrode slurry is prepared by dispersing a positive electrode mixture in a liquid component (dispersion medium). In the case of improving the dispersibility of the active material particles in the positive electrode mixture layer, it is important to improve the dispersibility of the positive electrode mixture into the liquid component (dispersion medium) in the positive electrode slurry. In this regard, the positive electrode mixture layer of the positive electrode (P) is constituted of a positive electrode mixture with improved dispersibility.

(Positive electrode active material)

Regarding the first metal composite oxide having a first particle size distribution (hereinafter may be referred to as the "first particle group") and the second composite metal oxide having a second particle size distribution (hereinafter may be referred to as the "second particle group") contained in the positive electrode active material, although it suffices if they respectively have volume-based median diameters D1 and D2 satisfying D1 > D2, they preferably have the following configurations.

First, the volume-based median diameter (D) may be measured by separating the positive electrode active material from the positive electrode mixture layer, or may be determined by image-analyzing a cross-sectional SEM image of the positive electrode mixture layer. Regardless of whichever method is used to determine the median diameter (D), approximately the same median diameters (without significant difference) can be obtained.

In the case of separating the positive electrode active material from the positive electrode mixture layer, the positive electrode mixture layer is peeled off from the positive electrode (P), and then, immersed in an appropriate solvent, to dissolve or swell the components other than the active material particles, such as the dispersant, followed by separation using centrifugation, which may be performed once or more. A sample of the separated positive electrode active material is analyzed using a laser diffraction-scattering type particle size distribution analyzer, so that a volume-based particle size distribution can be obtained. The particle diameter of the peak having the largest area in the obtained particle size distribution is the median diameter of either one of the first particle group and the second particle group, and the particle diameter of the peak having the second largest area is the median diameter of the other. The median diameter of the larger one is D1, and the median diameter of the smaller one is D2. If the peaks are overlapped with each other, peak separation may be performed by image analysis. From the areas of the respective peaks, a volume V1 of the first particle group and a volume V2 of the second particle group can be calculated.

In the case of image-analyzing a cross-sectional SEM image of the positive electrode mixture layer, first, the positive electrode mixture layer and the positive electrode current collector are cut together along the width direction of the positive electrode, to obtain a cross-section sample of the positive electrode in the thickness direction. At this time, the cross section may be processed using a cross-section polisher (CP), to obtain the cross-section sample. Next, the cross-section of the positive electrode mixture layer in the cross-section sample is observed using a scanning electron microscope (SEM).

From the contour image of a particle of the active material in the SEM image, the area surrounded by the contour is determined. The diameter of a circle (equivalent circle) having the same area as that surrounded by the contour of the active material particle is determined as a particle diameter of each particle i. The volume of a sphere having the same diameter as that of the equivalent circle is regarded as a volume Vi of each particle i. The diameters and the volumes of the equivalent circles of any 100 or more (preferably 1000 or more) particles are determined, so that a volume-based particle size distribution can be obtained. From the obtained particle size distribution, as in the case of separating the positive electrode active material from the positive electrode mixture layer, the median diameters D1 and D2, the volume V1 of the first particle group, and the volume V2 of the second particle group can be calculated.

Regarding the D1 and the D2 satisfying D1 > D2, a D1/D2 ratio may be, for example, 2 or more and 6 or less, and may be 3 or more and 5 or less.

The D1 is, for example, 8 $\mu$m or more, may be 10 $\mu$m or more, may be 11 $\mu$m or more, may be 12 $\mu$m or more, and may be 15 $\mu$m or more. The D1 may be set to 30 $\mu$m or less, may be 25 $\mu$m or less, and may be 20 $\mu$m or less. As described above, the D1 is preferably $8 \leq D1$ ($\mu$m) $\leq 30$.

The D2 may be 10 $\mu$m or less, may be 8 $\mu$m or less, may be 6 $\mu$m or less, and may be 5 $\mu$m or less. From the viewpoint of improving the charge-discharge cycle characteristic, the D2 may be set to 1 $\mu$m or more, and may be 3 $\mu$m or more. As described above, the D2 preferably satisfies $1 \leq D2$ ($\mu$m) $\leq 10$.

The active material particles are, usually, mainly composed of aggregated particles of primary particles, but not limited thereto. The particle diameter of the primary particles is, for example, 0.2 $\mu$m to 5 $\mu$m. Although only aggregates of primary particles are contained in the positive electrode in some cases, some or all of the active material particles may be constituted of primary particles only.

Here, in the positive electrode (P), a compressive strength (single particle fracture strength) F1 of particles of the first metal composite oxide and a compressive strength F2 of particles of the second composite oxide satisfy F1 < F2. In general, F1 ≥ F2 in many cases. The small-sized active material particles have a large BET specific surface area, and side reactions on the surface of the active material particles tend to increase. In the production process of the positive electrode mixture layer, a positive electrode slurry is applied onto a surface of a positive electrode current collector, and after the applied film is dried, the applied film is rolled. During rolling, the small-sized active material particles are crushed and packed so as to fill the gaps between the large-sized active material particles. Because of this, the electrolyte solution flow paths are clogged, and the capacity retention rate during charge-discharge cycles including rapid charging tends to be reduced.

On the other hand, when F1 < F2, during when the applied film is rolled, the crushing of the small-sized active material particles is suppressed, and the overall BET specific surface area of the positive electrode active material is unlikely to be increased. The degree to which the gaps between the large-sized active material particles are clogged is also reduced, leading to suppressed side reactions. Furthermore, since the crushing of the small-sized active material particles is suppressed, regions having different physical properties are unlikely to be formed locally in the positive electrode mixture layer, and the variations of the potential in the positive electrode (P) are also suppressed.

The F1/F2 may be any value less than 1, which may be 0.96 or less, is preferably 0.6 or less, and may be 0.2 or less. The F1/F2 may be 0.1 or more and 0.96 or less, and may be 0.1 or more and 0.9 or less.

The compressive strength (single particle fracture strength) can be measured using a commercially available measuring device (e.g., Micro Compression Tester (MCT-W201) manufactured by Shimadzu Corporation) by the following procedure.

(1) Particles of the positive electrode active material are spread over a lower pressing plate (SKS flat plate) of the measuring device.

(2) A particle to be measured is selected, to measure its particle diameter. At this time, a particle having a diameter as close as possible to the median diameter D1 or D2 is selected. The particle diameter herein means an equivalent circle diameter (a diameter of a circle having the same area as the particle) determined using an optical microscope image of the particle.

(3) With a 50-$\mu$m-diameter diamond flat indenter used as an upper pressing bar, adjustment is made such that only one particle selected as a sample is present between this upper pressing bar and the lower pressing plate.

(4) The upper pressing bar is descended slowly, and from when it comes in contact with the sample (the descending speed changes), a load is applied to the sample at a constant acceleration (specifically, a displacement rate of 2.7 mN/sec).

(5) The relationship between the load and the deformation amount of the sample is measured, and the point where the amount of deformation of the sample changes abruptly (the inflection point of the load-deformation amount profile) is taken as a fracture point, and from the load and the particle diameter at that point, the fracture strength is calculated based on the following equation. The fracture strength is calculated by averaging values obtained from five measurements.

$$St = 2.8P/\pi d^2$$

St: fracture strength [MPa or N/mm$^2$]
P: load [N]
d: particle diameter [mm]

A ratio ($100 \times V1 / (V1+V2)$) of the volume V1 of the first particle group to the sum of the volume V1 of the first particle group and the volume V2 of the second particle group may be, for example, 60 vol% or more and 80 vol% or less, and may be 70 vol% or more to 80 vol% or less.

The compositions of the first metal composite oxide and the second metal composite oxide are independent from each other, and may be the same as or different from each other. Even with the same composition, the volume-based median diameter (D) and the compressive strength can be controlled as desired, by the synthesis conditions of the positive electrode active material.

The compositions of the first metal composite oxide and the second metal composite oxide may be each independently represented by a general formula: $Li_yNi_xM_{(1-x)}O_2$. Here, the above general formula satisfies $0.8 \le x$ and $0 < y \le 1.2$, and M is at least one selected from the group consisting of Co, Mn, Al, Fe, Zr, Ti, Sr, Ca, and B.

The composite oxide having a composition represented by the above general formula has a high Ni content, and is promising as a high-capacity positive electrode active material. More preferably, the above general formula satisfies $0.85 \le x$.

Such a composite oxide containing Ni and Li (hereinafter may be referred to as a "composite oxide (N)") is beneficial for achieving high capacity and cost reduction. From the viewpoint of achieving high capacity, the proportion of Ni in the metal elements except Li contained in the composite oxide (N) is, as mentioned above, preferably 80 atom% or more, may be 85 atom% or more, and may be 90 atom% or more. The proportion of Ni in the metal elements except Li is desirably 95 atom% or less, for example.

The composite oxide (N) can be a lithium-transition metal composite oxide having a layered rock-salt type crystal structure. The composite oxide (N) may contain Co, and may contain at least one of Mn and Al. Co, Mn, and Al contribute to stabilizing the crystal structure of the composite oxide (N) having a high Ni content. However, from the viewpoint of production cost reduction, a smaller Co content is more desirable, and containing no Co is desirable. From the viewpoint of production cost reduction, in the composite oxide (N), it is desirable to set the proportion of Co in the metal elements except Li to be less than 2 atom%.

The composite oxide (N) may be represented by, for example, a general formula: $Li_yNi_{1-x1-x2-x3-z}CO_{x1}Mn_{x2}Al_{x3}Me_zO_{2+\beta}$. Here, the general formula satisfies $0.9 \le y \le 1.2$, $0 \le x1 \le 0.1$, $0 \le x2 \le 0.5$, $0 \le x3 \le 0.1$, $0 \le z \le 0.1$, $0.8 \le 1-x1-x2-x3-z$, and $-0.05 \le \beta \le 0.05$, and Me is an element other than Li, Ni, Mn, Al, Co, and oxygen.

Me may be at least one selected from the group consisting of Nb, Zr, B, Mg, Fe, Cu, Zn, Sn, Na, K, Ba, Sr, Ca, W, Mo, Si, Ti, Fe, and Cr, from the viewpoints of stabilizing the crystal structure of the composite oxide (N) and the like.

The contents of the elements constituting the active material particles can be measured using an inductively coupled plasma atomic emission spectroscopy (ICP-AES), an electron probe microanalyzer (EPMA), an energy dispersive X-ray spectroscopy (EDX), and the like.

The positive electrode current collector may be, for example, sheet-like in shape, and may have a thickness of, for example, 5 μm or more and 20 μm or less. Examples of the material of the positive electrode current collector include stainless steel, aluminum, aluminum alloy, and titanium.

The particles of the first metal composite oxide and the particles of the second metal composite oxide may have a surface modification layer containing a boron compound. In the case of using small-sized active material particles (second metal composite oxide particles), adverse effects caused due to their small size (e.g., side reactions caused by the increase in specific surface area) can be more effectively avoided by forming a surface modification layer on the active material particles.

(Carbon conductive agent)

The positive electrode mixture in the positive electrode (P) may include a carbon conductive agent (C) so that its electronic conductivity can be enhanced. The inclusion of the carbon conductive agent (C) enhances the electronic conductivity of the positive electrode mixture and reduces the resistance of the secondary battery.

(Dispersant)

In the positive electrode mixture of the positive electrode (P), a specific blend of dispersant (hereinafter also referred to as a "dispersant (D)") is contained as an auxiliary agent for improving the dispersibility of the positive electrode mixture. Specifically, the dispersant (D) contains a nitrile group-containing rubber. The inclusion of the nitrile group-containing rubber in the dispersant (D) significantly improves the dispersibility of the positive electrode mixture into the liquid component. Furthermore, the dispersant (D) acts effectively even when used in a very small amount relative to the active material particles. The dispersant (D) may further include at least one of a polyvinylpyrrolidone resin and a cellulose resin. The inclusion of these resins further improves the dispersibility of the positive electrode mixture in the liquid component.

There are a lot of dispersants for improving the dispersibility of the positive electrode mixture. This means that there are countless combinations of different kinds of dispersants. The effects of these combinations have not yet been fully studied. Moreover, it is difficult for those skilled in the art to predict what effects can be obtained when two or more different kinds of dispersants are combined. If the effects of those combinations could be predicted, the optimal combination could be determined without experimentation. However, in reality, it is difficult to predict the effects of those combinations. In other words, it can be said that the composition of the dispersant (D) including a nitrile group-containing rubber, a polyvinylpyrrolidone resin, and a cellulose resin is a combination that even those skilled in the art would not be able to find easily.

(Nitrile group-containing rubber)

Examples of the nitrile group-containing rubber include a copolymer of monomers containing acrylonitrile and a diene (e.g., butadiene). Specific examples of the nitrile group-containing rubber include acrylonitrile-based rubbers, such as acrylonitrile-butadiene rubber (NBR) and hydrogenated acrylonitrile-butadiene rubber (H-NBR).

The weight-average molecular weight of the nitrile group-containing rubber may be in the range of 5,000 to 500,000. In terms of enhancing the effects by the configuration of the present disclosure, the weight-average molecular weight of the nitrile group-containing rubber may be in the range of 10,000 to 300,000.

The nitrile group-containing rubber has an effect of suppressing the progress of the side reactions that may be increased by the use of the second particle group satisfying D1 > D2. The side reactions occur at the interface between the electrolyte solution and the active material particles, and become significant especially when the active material particles are in a charged state. In a secondary battery during charging, the potential of the positive electrode active material is not necessarily constant, and the side reactions are accelerated around the active material particles where the potential becomes locally high. The nitrile group-containing rubber improves the dispersibility of the positive electrode mixture, and is highly effective in suppressing the variations of the potential. Therefore, the effect of suppressing side reactions becomes more noticeable when the second particle group having a large specific surface area is used.

(Polyvinylpyrrolidone resin)

The polyvinylpyrrolidone resin is at least one selected from the group consisting of polyvinylpyrrolidone, and a polyvinylpyrrolidone derivative. Examples of the polyvinylpyrrolidone derivative include a polymer in which hydrogen atoms of polyvinylpyrrolidone are substituted by other substituents, and include, for example, alkylated polyvinylpyrrolidone and the like. As the polyvinylpyrrolidone resin, polyvinylpyrrolidone may be used alone, or a copolymer of vinylpyrrolidone and another monomolecule may be used. Examples of another monomolecule include a styrene-based or vinyl acetate-based monomolecule.

The weight-average molecular weight of the polyvinylpyrrolidone resin may be in the range of 1,000 to 2,000,000. In terms of enhancing the effects by the configuration of the present disclosure, the weight-average molecular weight of the polyvinylpyrrolidone resin may be in the range of 5,000 to 1,000,000.

(Cellulose resin)

The cellulose resin may be a cellulose derivative. Examples of the cellulose derivative include alkyl cellulose, such as methyl cellulose and ethyl cellulose, hydroxyalkyl cellulose, and an alkali metal salt thereof. Examples of an alkali metal that forms the alkali metal salt include potassium and sodium. Among these, methyl cellulose, ethyl cellulose, and hydroxypropyl methyl cellulose are preferred.

The weight-average molecular weight of the cellulose derivative may be in the range of 1,000 to 1,000,000 (e.g., in the range of 10,000 to 1,000,000). In terms of enhancing the effects by the configuration of the present disclosure, the weight-average molecular weight of the cellulose derivative may be in the range of 10,000 to 200,000.

In the dispersant (D), the amount of the cellulose derivative relative to 100 parts by mass of the nitrile group-containing rubber is preferably in the range of 10 to 400 parts by mass (e.g., in the range of 30 to 400 parts by mass, in the range of 50 to 300 parts by mass). By setting the amount within the range of 10 to 400 parts by mass, especially high effects can be obtained, as shown in Examples.

In the dispersant (D), the amount of the polyvinylpyrrolidone resin relative to 100 parts by mass of the nitrile group-containing rubber may be in the range of 10 to 400 parts by mass (e.g., in the range of 20 to 200 parts by mass). By setting the amount within the range of 10 to 400 parts by mass, especially high effects can be obtained, as shown in Examples.

(Action and effect of dispersant (D))

The use of the dispersant (D) can significantly improve the dispersibility of the positive electrode mixture, making it possible to obtain a positive electrode in which the active material density is high, and in which the resistance is low and the side reactions are suppressed. The effect thereof is particularly remarkable when the positive electrode active material satisfying F1 < F2 is used. For example, even when the active material density of the positive electrode mixture layer is set to 3.45 g/cm$^3$ or higher, or even 3.55 g/cm$^3$ or higher, or 3.6 g/cm$^3$ or higher, it is possible to obtain a positive electrode in which the resistance is low and the side reactions are suppressed.

The polyvinylpyrrolidone resin, because of its good wettability with the carbon conductive agent, has a certain effect in improving the dispersibility. Its electrochemical stability as a single substance, however, is inferior to that of other dispersants. Therefore, when used alone, the long-term dispersion stability tends to deteriorate. On the other hand, when the polyvinylpyrrolidone resin is used in combination with a cellulose resin and a nitrile group-containing rubber, long-term dispersion stability is exhibited.

Note that the affinity of the cellulose resin for a dispersion medium (esp. an aprotic polar solvent) in the positive electrode mixture is low. In terms of maximizing the effect thereof, the nitrile group-containing rubber and the polyvinylpyrrolidone resin function effectively. This makes it possible to achieve both high dispersibility and long-term dispersion stability.

The cellulose resin and the nitrile group-containing rubber are chemically stable, and are less likely to be denatured by the lithium component included in the active material particles. This further enhances the long-term dispersion stability of the positive electrode slurry. Especially, the positive electrode active material having a high Ni content is prone to side reactions. Therefore, the effect by the dispersant (D) becomes especially high.

(Dispersion liquid)

The carbon conductive agent (C) and the dispersant (D) may be used as a dispersion liquid (DL) combined with a dispersion medium. The dispersion liquid (DL) may contain one kind or two or more kinds of the aforementioned dispersant, and may contain other dispersants. Such other dispersants may be known dispersants. However, the proportion of the other dispersants in the whole dispersant is small, which is, for example, 30 mass% or less, more preferably 10 mass% or less.

The amount of the dispersion liquid (DL) used is reflected in the component ratio in the positive electrode slurry. The component ratio exemplified for the positive electrode mixture can be applied to the component ratio in the positive electrode slurry. The content ratio of the dispersant (D) in the positive electrode mixture is, for example, 1.0 mass% or less, and, relative to 100 parts by mass of the positive electrode active material, may be 0.01 parts by mass or more and 1 part by mass or less, and may be 0.05 parts by mass or more and 0.5 parts by mass or less.

(Binder)

The positive electrode mixture layer can further contain a vinylidene fluoride-based resin. The vinylidene fluoride-based resin functions as a binder for binding the active material particles together or binding the active material particles to the positive electrode current collector. The vinylidene fluoride-based resin contains a vinylidene fluoride unit as a monomer unit. The vinylidene fluoride-based resin may be a copolymer of vinylidene fluoride and another monomer. Examples of the vinylidene fluoride-based resin include polyvinylidene fluoride (PVDF), and a polymer of a vinylidene fluoride unit and another monomer unit (tetrafluoroethylene, hexafluoropropylene, etc.). The content ratio of the vinylidene fluoride unit in the polymer is, for example, 30 mol% or more.

The weight-average molecular weight of the vinylidene fluoride-based resin may be 800,000 or more, 1,000,000 or more, 1,100,000 or more, 1,200,000 or more, or 1,300,000 or more. The weight-average molecular weight of the vinylidene fluoride-based resin may be 2,000,000 or less, or 1,800,000 or less. By setting the weight-average molecular weight to 1,000,000 or more, a high effect as a binder can be obtained with a small amount.

The vinylidene fluoride-based resin is not included in the examples of the dispersant. The amount of the vinylidene fluoride-based resin relative to 100 parts by mass of the dispersant (D) may be, for example, in the range of 50 to 2,000 parts by mass (e.g., in the range of 100 to 1,000 parts by mass).

In the positive electrode mixture layer, the amount of the vinylidene fluoride-based resin relative to 100 parts by mass of the positive electrode active material may be, for example, 0.1 parts by mass or more, or 0.5 parts by mass or more, and may be 2.0 parts by mass or less, or 1.5 parts by mass or less.

(Carbon nanotubes)

The carbon conductive agent preferably includes carbon nanotubes (hereinafter may be referred to as "CNTs"). By using CNTs as the carbon conductive agent, the variations of the potential in the positive electrode can be more significantly suppressed. Furthermore, by adding only a small amount of CNTs to the positive electrode mixture, the resistance of the positive electrode mixture layer can be significantly reduced.

The positive electrode mixture layer may contain a carbon conductive agent other than CNTs. Examples of such a carbon conductive agent include electrically conductive carbon materials, such as graphene, and carbon black (acetylene black, Ketjen black, furnace black, etc.). The proportion of the CNTs in the whole carbon material (conductive agent) is, for example, 10 mass% or more, preferably in the range of 30 to 100 mass% (e.g., in the range of 50 to 100 mass%).

In the positive electrode mixture layer, the amount of the CNTs relative to 100 parts by mass of the positive electrode active material may be 0.01 parts by mass or more, or 0.04 parts by mass or more, and may be 1 part by mass or less, or 0.5 parts by mass or less.

The length (average length) of the CNTs may be 1 μm or more. In this case, the average value of the aspect ratio of the CNTs (ratio of length to diameter of fibers) is extremely large. The CNTs with a large aspect ratio easily come in contact with the positive electrode active material and the positive electrode current collector. Furthermore, CNTs have excellent electrical conductivity. Therefore, by using CNTs, the direct current resistance (DCR) of the battery can be considerably reduced.

The average length of the CNTs is preferably 1 μm or more, from the viewpoint of enhancing the conductivity in the positive electrode mixture layer. On the other hand, although the upper limit thereof is not particularly limited, the length of the CNTs is preferably not much longer than the particle diameter of the positive electrode active material. The average length of the CNTs may be 1 $\mu$m or more, or 5 $\mu$m or more, and may be 20 $\mu$m or less, or 10 $\mu$m or less. The CNTs in the positive electrode mixture layer may be present in some cases in the form of a bundle of CNTs. For the calculation of the above average length, the length of a single CNT that is present in the bundled CNTs is used.

The average length of the CNTs is determined by image analysis using a scanning electron microscope (SEM). The average length of the CNTs is determined by measuring the lengths of randomly selected 100 CNTs, and arithmetically averaging the measured values. The length refers to the length of the CNT when straightened.

The diameter (average diameter) of the CNTs may be 20 nm or less, or 15 nm or less, and may be 1 nm or more. By setting the average diameter to 20 nm or less, a high effect can be obtained with a small amount.

The average diameter of the CNTs can be determined by image analysis using a transmission electron microscope (TEM). The average diameter of the CNTs can be measured as follows. First, 100 CNTs are randomly selected, and the diameter (outer diameter) of each of them is measured at any one point. The average diameter is then calculated by arithmetically averaging the measured diameters.

The CNTs may be either single-walled CNTs (SWCNTs) or multi-walled CNTs (MWCNTs). Examples of the multi-walled CNTs include double-walled CNTs, triple-walled CNTs, and CNTs with four or more walls. The positive electrode mixture layer preferably contains single-walled CNTs and/or multi-walled CNTs. The multi-walled CNTs contained in the positive electrode mixture layer may be one kind of multi-walled CNTs or two or more kinds of multi-walled CNTs with different numbers of walls.

The BET specific surface area of the CNTs may be 200 $m^2$/g or more, 250 $m^2$/g or more, or 300 $m^2$/g or more. Although there is no particular limitation on its upper limit, the BET specific surface area may be 1000 $m^2$/g or less. By setting the BET specific surface area to 200 $m^2$/g or more, even with a small amount of addition, the variations of the potential of the active material in the mixture layer can be suppressed. The BET specific surface area of the CNTs can be measured using a nitrogen adsorption method. Nevertheless, in general, there is a correlation between the BET specific surface area of CNTs and their fiber diameter and fiber length. Specifically, given that the fiber diameter is 10 nm and the fiber length is 1 $\mu$m, the BET specific surface area is 200 $m^2$/g or more and 300 $m^2$/g or less. Therefore, the BET specific surface area of the CNTs can be calculated with high accuracy even while included in the battery.

Usually, it is difficult to highly disperse CNTs. When the dispersant (D) is used, however, the dispersibility of CNTs is significantly improved. Therefore, even with a small amount of addition of CNTs into the positive electrode mixture, the conductivity of the positive electrode mixture layer can be enhanced, and the resistance of the positive electrode mixture layer can be significantly reduced. From the viewpoint of achieving high capacity of a secondary battery, it is desirable to reduce the amount of the conductive agent as much as possible. However, simply by reducing the adding amount of CNTs, the dispersibility of the positive electrode mixture is reduced, and the conductive paths are not sufficiently formed, causing a positive electrode capacity decrease and an aggregation of CNTs. On the other hand, in the positive electrode mixture layer containing the dispersant (D), such phenomena are unlikely to occur, which considerably contributes to improving the performance, including achieving high capacity (high density), of the secondary battery.

(Method for producing positive electrode active material)

An example of a method for producing active material particles will be described below. The method for producing active material particles includes, for example, a synthesis step, a washing step, a drying step, and an addition step. Note that active material particles may be produced by a method other than the production method below.

In the synthesis step, a metal hydroxide containing the metal elements constituting the first or second metal composite oxide is mixed with a Li compound, and fired, to obtain particles of a metal composite oxide (lithium-transition metal composite oxide). Instead of the metal hydroxide, a metal oxide obtained by heat-treating the metal hydroxide may be used. The volume-based median diameter of the metal hydroxide is preferably 7 $\mu$m or less.

The metal hydroxide can be obtained by, for example, dropping an alkaline solution, such as sodium hydroxide, into a solution of a metal salt containing the metal elements constituting the composite oxide particles, under stirring, to adjust the pH to the alkaline side (e.g., 8.5 to 12.5), and be precipitated (co-precipitated).

The Li compound may be, for example, $Li_2CO_3$, LiOH, $Li_2O_2$, $Li_2O$, $LiNO_3$, $LiNO_2$, $Li_2SO_4$, $LiOH \cdot H_2O$, LiH, LiF, and the like. The mixing ratio between the metal hydroxide (metal oxide) and the Li compound is preferably set such that the molar ratio of the metal elements except Li to Li is in the range of 1:0.98 to 1:1.1.

The positive electrode active material can contain LiOH and $Li_2CO_3$ derived from the Li compound. The positive electrode active material can contain LiOH and $Li_2CO_3$ in a total of, for example, 0.2 mass% or more.

The higher the total content ratio of LiOH and $Li_2CO_3$ (in other words, alkaline components) is, the more difficult it generally is to control the dispersibility of the positive electrode mixture in the positive electrode slurry. This increases the importance of using the dispersant (D). The alkaline components, by reacting with a binder such as polyvinylidene fluoride, tend to be a cause of changes in the state of the positive electrode slurry, tending to destabilize the state of the positive electrode slurry. The higher the Ni content in the composite oxide constituting the positive electrode active material is, the higher the total content ratio of LiOH and $Li_2CO_3$ can be, which however is 1.0 mass% or less at maximum. By using the dispersant (D), the destabilization of the positive electrode slurry due to the alkaline components can be significantly restricted.

When mixing a metal hydroxide (metal oxide) with a Li compound, other compounds may be added, such as a Ca compound, a Sr compound, an Fe compound, a Cu compound, a Zr compound, a Mg compound, a Si compound, a Cr compound, a Ti compound, a S compound, and a fluoride. Examples of the Ca compound include $CaO$, $Ca(OH)_2$, and $CaCO_3$. Examples of the Sr compound include $SrO$, $Sr(OH)_2$, and $SrCO_3$. With regard to other elements, too, an oxide, a hydroxide, a sulfide, and a fluoride can be utilized. Alkaline earth metals and Zr are highly effective in reducing the resistance, and therefore useful.

The mixture including a metal hydroxide (metal oxide) and a Li compound is fired, for example, in an oxygen atmosphere (while flowing a gas having an oxygen concentration of 80% or more). The firing conditions may be as follows: the temperature-raising rate is in the range of more than 1.0 °C/min and 5.5 °C/min or less at 450 °C or higher and 680 °C or lower, and the maximum temperature reached is in the range of 700 °C or higher and 850 °C or lower. A temperature-raising rate from above 680 °C to the maximum temperature reached may be set to, for example, 0.1 °C/min to 3.5 °C/min. The holding time of the maximum temperature reached may be 1 hour or more and 30 hours or less. This firing step may be multi-stage firing, and a plurality of the temperature-raising rates may be set for each temperature range as long as they are within the above-specified range. The particle diameter of the individual particles can be adjusted by adjusting the firing conditions. For example, increasing the maximum temperature reached can increase the particle diameter of the individual particles.

In the washing step, the composite oxide particles obtained in the synthesis step are washed with water, and dehydrated into a cake-like composition. The washing and dehydration can be performed using known methods and conditions. They are performed within a range that does not cause lithium to leach out from the composite oxide particles and not degrade the battery characteristics. Here, to the cake-like composition, other compounds may be added, such as a Ca compound, a Sr compound, an Fe compound, a Cu compound, a Zr compound, a Mg compound, a Si compound, a Cr compound, a Ti compound, a S compound, and a fluoride.

In the drying step, the cake-like composition obtained in the washing step is dried, to obtain a powder-like composition. The drying step may be performed under vacuum atmosphere. The drying conditions are, for example, at 150 °C to 400 °C and for 0.5 to 15 hours.

In the addition step, a boron-containing compound, such as boric acid ($H_3BO_3$), is added to the powder-like composition obtained in the drying step, followed by heating to 200 °C to 400 °C. This can form a surface modification layer containing the boron compound, on the surface of the lithium-transition metal composite oxide. The adding amount of the boron-containing compound is, for example, 0.1 mol% to 7 mol%, relative to the total molar amount of the metal elements except Li in the composite oxide particles.

In the manner as described above, a positive electrode active material (first particle group and second particle group) is obtained. The positive electrode active material may be prepared by a method other than the above synthesis step, and may be prepared by a known method.

The content ratio of the positive electrode active material in the positive electrode mixture layer is determined using a sample of the positive electrode mixture. The sample of the positive electrode mixture is obtained by the following procedure. First, a secondary battery in a discharged state is disassembled, to take out the positive electrode. Next, the positive electrode is washed with an organic solvent, and then, vacuum-dried, from which only the positive electrode mixture layer is taken out, and used as a mixture sample. With respect to the mixture sample, analysis such as TG-DTA, NMR, and pyrolysis GC-MS is performed, and thus, the ratio of the components other than the positive electrode active material, such as the dispersant, the binder, and the carbon conductive agent, can be calculated. If the carbon conductive agent includes a plurality of kinds of carbon materials, the proportion of carbon nanotubes in the conductive agent can be calculated by performing a thermal analysis, such as TG-DTA, in combination with a microscopic Raman spectroscopy, with respect to a cross section of the positive electrode mixture layer.

A mass of the positive electrode mixture layer (single layer) per 1 $m^2$ may be 200 g or more, preferably 250 g or more. Setting the above mass to 250 g or more makes it possible to achieve high capacity of a secondary battery. As described above, with the positive electrode according to the present disclosure, the adverse effects caused by increasing the above mass can be suppressed. The above mass can be increased by forming the positive electrode mixture layer thick or increasing the density of the positive electrode mixture layer. When the mass of the positive electrode mixture layer (single layer) per 1 $m^2$ is large, in the production process of the positive electrode mixture layer, when drying a positive electrode slurry in which the positive electrode mixture is dispersed in a liquid component (dispersion medium), the distribution of auxiliary agent tends to be non-uniform, resulting in significant decrease in capacity. It is therefore particularly important to improve the dispersibility of the positive electrode mixture. In the later-described Examples, with the mass of the positive electrode mixture layer (single layer) per 1 $m^2$ set to 320 $g/m^2$, sufficient battery characteristics were ensured.

The thickness of the positive electrode mixture layer is not particularly limited, and may be in the range of 50 $\mu$m to 250 $\mu$m. According to the present embodiment, even when the positive electrode mixture layer is formed thick, the increase in the internal resistance can be suppressed.

(Positive electrode current collector)

The positive electrode current collector is constituted of a sheet-like conductive material. The positive electrode current collector may be a non-porous conductive substrate (metal foil, etc.), or a porous conductive substrate (mesh, net, punched sheet, etc.). The thickness of the positive electrode current collector is, although not particularly limited, for example, 3 to 50 μm, which may be selected depending on an intended use. Examples of the material of the positive electrode current collector include stainless steel, aluminum, aluminum alloy, and titanium. The positive electrode mixture layer may be formed only on one surface of the positive electrode current collector or on both surfaces of the positive electrode current collector.

(Production methods of positive electrode slurry and positive electrode)

The positive electrode slurry according to the present embodiment contains the aforementioned components of the positive electrode mixture, and a liquid component (dispersion medium) in which they are dispersed. Specifically, the positive electrode mixture includes at least a positive electrode active material, a carbon conductive agent (e.g., CNTs), and a dispersant (D). The positive electrode active material includes a first metal composite oxide having a first particle size distribution and a second composite metal oxide having a second particle size distribution. As described above, the volume-based median diameter D1 of the first metal composite oxide and the volume-based median diameter D2 of the second metal composite oxide satisfy D1 > D2. The dispersant (D) includes a nitrile group-containing rubber, and can further include a polyvinylpyrrolidone resin and a cellulose resin. The positive electrode mixture further includes a binder (e.g., polyvinylidene fluoride).

The liquid component (dispersion medium) is not particularly limited, and may be water, an organic solvent, or a mixture thereof. Examples of the organic solvent include protic solvents, such as alcohols (ethanol, etc.), and aprotic solvents, such as ethers (tetrahydrofuran, etc.), amides (dimethylformamide, etc.), and N-methyl-2-pyrrolidone (NMP).

The ratio of the components contained in the positive electrode slurry is, in principle, reflected in the component ratio in the positive electrode mixture layer. Therefore, by changing the ratio of the components contained in the positive electrode slurry, the component ratio in the positive electrode mixture layer can be changed. The component ratio exemplified for the positive electrode mixture layer can be applied to the component ratio in the positive electrode slurry.

The production method of the positive electrode is not particularly limited, and a known method may be adopted. For example, the positive electrode may be formed in the following manner. First, a positive electrode slurry is prepared in which a positive electrode mixture is dispersed in a liquid component (dispersion medium). Next, the positive electrode slurry is applied onto a surface of a positive electrode current collector, to form an applied film, and then, the applied film is dried, to form a positive electrode mixture layer. The applied film after drying may be rolled, as necessary. The positive electrode mixture layer may be formed on one surface or both surfaces of the positive electrode current collector.

(Secondary battery)

A secondary battery includes the above-described positive electrode for secondary batteries, a separator, a negative electrode facing the positive electrode with the separator interposed therebetween, and an electrolyte. The secondary battery may include an outer body. Examples of the secondary battery include a lithium-ion secondary battery, and a lithium-metal secondary battery. The components other than the positive electrode mixture layer are not particularly limited, and known components may be used. Examples of the components other than the positive electrode of the secondary battery will be described below.

(Negative electrode)

The negative electrode, typically, includes a negative electrode mixture layer containing a negative electrode active material. The negative electrode may include a negative electrode current collector, and a negative electrode mixture layer disposed on the negative electrode current collector. In the case of a lithium-metal secondary battery, the negative electrode may be a negative electrode current collector on which lithium metal or lithium alloy can deposit.

The negative electrode mixture layer is constituted of a negative electrode mixture, and the negative electrode mixture contains a negative electrode active material as an essential component. The negative electrode mixture may contain, as optional components, a binder, a thickener, a conductive agent, and the like. For these optional components, those exemplified as the components of the positive electrode may be used.

The negative electrode mixture layer may be formed by applying a negative electrode slurry in which components of the negative electrode mixture are dispersed in a dispersion medium, onto a surface of the negative electrode current collector, followed by drying. The applied film after drying may be rolled, as necessary. For the dispersion medium, those exemplified as the dispersion medium of the positive electrode slurry may be used. The negative electrode mixture layer may be formed on only one surface of the negative electrode current collector, or on both surfaces of the negative electrode current collector.

(Negative electrode active material)

The negative electrode active material is selected depending on the type of secondary battery. An example of the negative electrode active material is a material capable of absorbing and releasing lithium ions. Examples of such a material include a carbonaceous material and a Si-containing material. The negative electrode active material may include a Si-containing material, and may be a Si-containing material. As the negative electrode active material, metal lithium, lithium alloy, and the like may be used. The negative electrode may contain the negative electrode active material singly or in combination of two or more kinds.

Examples of the carbonaceous material include graphite, graphitizable carbon (soft carbon), and non-graphitizable carbon (hard carbon). The carbonaceous material may be used singly or in combination of two or more kinds. Graphite is preferred because of its excellent charge-discharge stability and low irreversible capacity. Examples of the graphite include natural graphite, artificial graphite, and graphitized mesophase carbon particles.

Examples of the Si-containing material include elementary Si, silicon alloy, a silicon compound (silicon oxide, etc.), and a composite material including a lithium-ion conducting phase (matrix) and silicon phases dispersed therein. Examples of the silicon oxide include $SiO_x$ particles. The symbol x is, for example, $0.5 \leq x < 2$, and may be $0.8 \leq x \leq 1.6$. The lithium-ion conducting phase may be at least one selected from the group consisting of a $SiO_2$ phase, a silicate phase, and a carbon phase.

For the negative electrode current collector, a metal foil may be used. The negative electrode current collector may be porous. Examples of the material of the negative electrode current collector include stainless steel, nickel, nickel alloy, copper, and copper alloy.

(Electrolyte)

The nonaqueous electrolyte may be a liquid electrolyte (electrolyte solution), may be a gel electrolyte, and may be a solid electrolyte.

The gel electrolyte contains a lithium salt and a matrix polymer, or contains a lithium salt, a nonaqueous solvent, and a matrix polymer. As the matrix polymer, for example, a polymer material that absorbs a nonaqueous solvent and turns into a gel is used. Examples of the polymer material include fluorocarbon resins, acrylic resins, polyether resins, and polyethylene oxide.

The solid electrolyte may be an inorganic solid electrolyte. As the inorganic solid electrolyte, a known material for use in all-solid lithium-ion secondary batteries and the like (e.g., oxide-based solid electrolyte, sulfide-based solid electrolyte, halide-based solid electrolyte) is used.

The liquid electrolyte (electrolyte solution) contains a nonaqueous solvent, and an electrolyte salt dissolved in the nonaqueous solvent. The electrolyte salt contains at least a lithium salt. The concentration of the lithium salt in the nonaqueous electrolyte is, for example, 0.5 mol/L or more and 2 mol/L or less.

For the nonaqueous solvent, a known material can be used. A nonaqueous solvent that can be used include a cyclic carbonic acid ester, a chain carbonic acid ester, a cyclic carboxylic acid ester, a chain carboxylic acid ester, and the like. Examples of the cyclic carbonic acid ester include propylene carbonate (PC), ethylene carbonate (EC), fluoroethylene carbonate (FEC), and vinylene carbonate (VC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL), and $\gamma$-valerolactone (GVL). Examples of the chain carboxylic acid ester include nonaqueous solvents, such as methyl acetate, ethyl acetate, propyl acetate, methyl propionate (MP), and ethyl propionate (EP). These nonaqueous solvents may be used singly or in combination of two or more kinds.

Examples of the lithium salt include lithium salts of chlorine-containing acid ($LiClO_4$, $LiAlCl_4$, $LiB_{10}Cl_{10}$, etc.), lithium salts of fluorine-containing acid ($LiPF_6$, $LiPF_2O_2$, $LiBF_4$, $LiSbF_6$, $LiAsF_6$, $LiCF_3SO_3$, $LiCF_3CO_2$, etc.), lithium salts of fluorine-containing acid imide ($LiN(FSO_2)_2$, $LiN(CF_3SO_2)_2$, $LiN(CF_3SO_2)(C_4F_9SO_2)$, $LiN(C_2F_5SO_2)_2$, etc.), and lithium halides (LiCl, LiBr, LiI, etc.). These lithium salts may be used singly or in combination of two or more kinds.

The lithium salt concentration in the electrolyte solution may be 1 mol/L or more and 2 mol/L or less, and may be 1 mol/L or more and 1.5 mol/L or less. By setting the lithium salt concentration in the above range, an electrolyte solution having excellent ionic conductivity and appropriate viscosity can be obtained.

The electrolyte solution may contain a known additive. Examples of the additive include 1,3-propane sultone, methylbenzene sulfonate, cyclohexylbenzene, biphenyl, diphenyl ether, and fluorobenzene.

(Separator)

The separator is disposed between the positive electrode and negative electrode. Preferably, the separator is excellent in ion permeability and has moderate mechanical strength and electrically insulating properties. As the separator, a microporous thin film, a woven fabric, a nonwoven fabric, and the like can be used. Examples of the material of the separator include polyolefins, such as polypropylene and polyethylene, and other resins.

(Outer body)

In the outer body (battery case), an electrode group and the nonaqueous electrolyte are housed. The outer body is not particularly limited, and may be a known outer body. The electrode group is constituted of the positive electrode, a negative electrode, and a separator. The electrode group may be configured in any way, and may be of a wound type or a stacked type. A wound electrode group is formed by winding the positive electrode and a negative electrode with a separator interposed therebetween. A stacked electrode group is formed by stacking the positive electrode and a negative electrode with a separator interposed therebetween. The nonaqueous electrolyte secondary battery may be in any form, and may be in a cylindrical, prismatic, coin, button, or laminate shape.

FIG. 1 is a longitudinal sectional view of a cylindrical secondary battery 10 (hereinafter may be simply referred to as a "battery 10") according to the present disclosure. The present disclosure, however, is not limited to the following configuration.

In FIG. 1, the battery 10 includes an electrode group 18, a nonaqueous electrolyte (not shown), and a bottomed cylindrical battery case (metal can) 22 that houses these components. A sealing assembly 11 is crimped onto the opening of the battery case 22 with a gasket 21 therebetween. This seals the interior of the battery 10. The sealing assembly 11 includes an internal pressure-activated type safety valve that interrupts the current when the battery internal pressure rises excessively, and ruptures if necessary. Specifically, the sealing assembly includes a valve body 12 having a thin-walled portion, a metal plate 13, and an annular insulating member 14 interposed between the valve body 12 and the metal plate 13. The valve body 12 and the metal plate 13 are electrically connected to each other at their respective centers. A positive electrode lead 15L extended from a positive electrode 15 is connected to the metal plate 13. Thus, the valve body 12 functions as an external terminal of the positive electrode 15 and as a safety valve. When the battery internal pressure rises, the connection between the valve body 12 and the metal plate 13 is broken, to interrupt the current, and when the thin-walled portion ruptures, the gas is released outside. In this way, the safety is ensured. A negative electrode lead 16L extended from a negative electrode 16 is connected to the inner bottom surface of the battery case 22. An annular groove 22a is formed near the opening end of the battery case 22. A first insulating plate 23 is disposed between one end face of the electrode group 18 and the annular groove 22a. A second insulating plate 24 is disposed between the other end face of the electrode group 18 and the bottom of the battery case 22. The electrode group 18 is formed by winding the positive electrode 15 and the negative electrode 16, with a separator 17 interposed therebetween, into a columnar shape. The outermost layer of the electrode group 18 is constituted of the negative electrode 16 on the winding-finish side. In other words, in the electrode group 18, the outermost layer of the negative electrode 16 is arranged further outside than the outermost layer of the positive electrode 15. Note that the outermost layer of the electrode group 18 is constituted of a negative electrode current collector 16b which is an end portion 16D on the winding-finish side of the negative electrode 16 and which is wound around the outer surface of the negative electrode 16 on the inner side, without the positive electrode 15 interposed therebetween. Such a structure is merely an example, and the structure is not limited thereto.

(Supplementary notes)

The above description discloses the following techniques.

(Technique 1)

A positive electrode for secondary batteries, comprising:

a positive electrode current collector; and a positive electrode mixture layer disposed on a surface of the positive electrode current collector, wherein
the positive electrode mixture layer contains a positive electrode active material, a carbon conductive agent, and a dispersant,
the positive electrode active material includes a first metal composite oxide having a first particle size distribution, and a second composite metal oxide having a second particle size distribution,
a volume-based median diameter D1 of the first metal composite oxide and a volume-based median diameter D2 of the second metal composite oxide satisfy D1 > D2,

a compressive strength F1 of particles of the first metal composite oxide and a compressive strength F2 of particles of the second composite oxide satisfy F1 < F2, and

the dispersant includes a nitrile group-containing rubber.

(Technique 2)

The positive electrode for secondary batteries according to technique 1, wherein

the first metal composite oxide and the second metal composite oxide are each independently represented by a general formula: $Li_yNi_xM_{(1-x)}O_2$,

the general formula satisfies $0.8 \leq x$ and $0 < y \leq 1.2$, and

the M is at least one element selected from the group consisting of Co, Mn, Al, Fe, Zr, Ti, Sr, Ca, and B.

(Technique 3)

The positive electrode for secondary batteries according to technique 2, wherein the general formula satisfies $0.85 \leq x$.

(Technique 4)

The positive electrode for secondary batteries according to any one of techniques 1 to 3, wherein

the first particle size distribution satisfies $8 \leq D1 \, (\mu m) \leq 30$, and

the second particle size distribution satisfies $1 \leq D2 \, (\mu m) \leq 10$.

(Technique 5)

The positive electrode for secondary batteries according to any one of techniques 1 to 4, wherein the positive electrode mixture layer further contains a vinylidene fluoride-based resin.

(Technique 6)

The positive electrode for secondary batteries according to technique 5, wherein a weight-average molecular weight of the vinylidene fluoride-based resin is 1,000,000 or more.

(Technique 7)

The positive electrode for secondary batteries according to any one of techniques 1 to 6, wherein the dispersant further includes a polyvinylpyrrolidone resin and a cellulose resin.

(Technique 8)

The positive electrode for secondary batteries according to any one of techniques 1 to 7, wherein the carbon conductive agent includes carbon nanotubes.

(Technique 9)

The positive electrode for secondary batteries according to technique 8, wherein a diameter of the carbon nanotubes is 20 nm or less.

(Technique 10)

A secondary battery, comprising:

the positive electrode for secondary batteries according to any one of techniques 1 to 9;

a separator; a negative electrode facing the positive electrode with the separator interposed between the positive electrode and the negative electrode; and an electrolyte solution.

The present disclosure will be described in detail below with reference to Examples. The present disclosure, however, is not limited to the Examples below. In the present Examples, a plurality of nonaqueous electrolyte secondary batteries with different positive electrodes were fabricated and evaluated.

<<Fabrication of battery A1>>

A battery A1 was fabricated in the following manner.

(1) Production of negative electrode

A silicon composite material and graphite were mixed in a mass ratio of silicon composite material : graphite = 5:95, and used as a negative electrode active material. The negative electrode active material was mixed with sodium carboxymethyl cellulose (CMC-Na), styrene-butadiene rubber (SBR), and water in a predetermined mass ratio, to prepare a negative electrode slurry. Next, the negative electrode slurry was applied onto a surface of a copper foil (negative electrode current collector), to form a laminate including the copper foil and applied films formed on the copper foil. Next, after drying of the applied films, the laminate was rolled. In this way, a negative electrode including a copper foil and negative electrode mixture layers formed on both sides of the copper foil was produced.

(2) Production of positive electrode

A positive electrode active material, a dispersant (D), MWCNTs (carbon conductive agent), polyvinylidene fluoride (binder), and N-methyl-2-pyrrolidone (dispersion medium) were mixed in a predetermined mass ratio, to prepare a positive electrode slurry.

For the positive electrode active material, particles of a first metal oxide (NCM) represented by a composition formula $LiNi_{0.90}Co_{0.05}Mn_{0.05}O_2$ and a second metal composite oxide (NCM) represented by a composition formula $LiNi_{0.85}Co_{0.10}Mn_{0.05}O_2$ were used.

The particles of the first metal oxide were a first particle group having a median diameter D1 of 14 $\mu$m, and the particles of the second metal oxide were a second particle group having a median diameter D2 of 4 $\mu$m (D1/D2 = 3.5). The first particle group and the second particle group were mixed in a volume ratio of 8:2.

The compressive strength F1 of the particles of the first metal oxide and the compressive strength F2 of the particles of the second metal oxide were 180 MPa and 190 MPa, respectively, and F1/F2 = 0.95 (F1 < F2).

The average length of the MWCNTs was 1 to 5 $\mu$m and the average diameter was 10 nm. The CNT amount was set to 0.5 parts by mass relative to 100 parts by mass of the positive electrode active material.

The weight-average molecular weight of the polyvinylidene fluoride was 1,300,000. The polyvinylidene fluoride amount was set to 1.0 part by mass relative to 100 parts by mass of the positive electrode active material.

The amount of the dispersant (D) was set to 0.2 parts by mass relative to 100 parts by mass of the positive electrode active material. The dispersant (D) includes polyvinylpyrrolidone (PVP), ethyl cellulose (eC), and a nitrile group-containing rubber (hydrogenated nitrile rubber (HNBR)).

The amount of the ethyl cellulose (eC) relative to 100 parts by mass of the hydrogenated nitrile rubber (HNBR) was 100 parts by mass.

The amount of the polyvinylpyrrolidone (PVP) relative to 100 parts by mass of the hydrogenated nitrile rubber (HNBR) was 100 parts by mass.

The positive electrode slurry was applied onto surfaces of an aluminum foil (positive electrode current collector), to form a laminate of the aluminum foil and applied films. Next, after the applied films were dried, the laminate was rolled. In this way, a positive electrode including an aluminum foil and positive electrode mixture layers formed on both sides of the aluminum foil was produced. The active material density in the positive electrode mixture layers was 3.5 $g/cm^3$.

(3) Preparation of electrolyte solution

An electrolyte solution was prepared by adding $LiPF_6$ (lithium salt) to a nonaqueous solvent. The concentration of $LiPF_6$ in the electrolyte solution was set to 1.0 mol/L. The nonaqueous solvent used here was a mixed solvent containing ethylene carbonate (EC) and ethyl methyl carbonate (EMC) in a volume ratio of EC:EMC = 3:7.

(4) Fabrication of secondary battery

A lead was attached to each of the positive and negative electrodes. Next, the positive electrode, the negative electrode, and a separator were spirally wound, such that the separator was arranged between the positive electrode and the negative electrode, to form an electrode group. Next, the electrode group was inserted into an outer body. The outer body used here was an outer body made of a laminate film including an aluminum foil (barrier layer). Next, the outer body with the electrode group inserted therein was vacuum-dried at 105 °C for 2 hours. Then, the nonaqueous electrolyte solution was injected into the outer body, and the opening of the outer body was sealed. In this way, a secondary battery A1 was fabricated.

<<Fabrication of battery A2>>

A positive electrode was produced and a secondary battery A2 was fabricated in the same manner and under the same conditions as the battery A1, except that the laminate of the aluminum foil and the applied films was rolled until the active material density in the positive electrode mixture layers reached 3.6 g/cm$^3$.

<<Fabrication of battery A3>>

A positive electrode was produced and a secondary battery A3 was fabricated in the same manner and under the same conditions as the battery A1, except that only the nitrile group-containing rubber was used as the dispersant in an amount of 0.2 parts by mass relative to 100 parts by mass of the positive electrode active material. The active material density in the positive electrode mixture layers was 3.5 g/cm$^3$.

<<Fabrication of battery A4>>

A positive electrode was produced and a secondary battery A4 was fabricated in the same manner and under the same conditions as the battery A3, except that, instead of the MWCNTs, acetylene black (AB) was used as the carbon conductive agent in an amount of 1.5 parts by mass relative to 100 parts by mass of positive electrode active material. The active material density in the positive electrode mixture layers was 3.5 g/cm$^3$.

<<Fabrication of battery A5>>

A positive electrode was produced and a secondary battery A5 was fabricated in the same manner and under the same conditions as the battery A4, except that the weight-average molecular weight of the polyvinylidene fluoride was 1,000,000. The active material density in the positive electrode mixture layers was 3.5 g/cm$^3$.

<<Fabrication of battery B1>>

A positive electrode was produced and a secondary battery B1 was fabricated in the same manner and under the same conditions as the battery A1, except that the particles of the second metal composite oxide (NCA) represented by a composition formula $LiNi_{0.85}Co_{0.10}Al_{0.05}O_2$ were used, and the laminate of the aluminum foil and the applied films was rolled until the active material density in the positive electrode mixture layers reached 3.6 g/cm$^3$. The particles of the second metal oxide were a second particle group having a median diameter D2 of 4 μm, and the first particle group and the second particle group were mixed in a volume ratio of 8:2. The compressive strength F2 of the second composite oxide particles was 120 MPa, and F1/F2 = 1.50 (F1 > F2).

<<Fabrication of battery B2>>

A positive electrode was produced and a secondary battery B2 was fabricated in the same manner and under the same conditions as the battery A1, except that only polyvinylpyrrolidone (PVP) was used as the dispersant in an amount of 0.2 parts by mass relative to 100 parts by mass of the positive electrode active material. The active material density in the positive electrode mixture layers was 3.5 g/cm$^3$.

<<Fabrication of battery B3>>

A positive electrode was produced and a secondary battery B2 was fabricated in the same manner and under the same conditions as the battery A1, except that only ethyl cellulose (eC) was used as the dispersant in an amount of 0.2 parts by mass relative to 100 parts by mass of the positive electrode active material. The active material density in the positive electrode mixture layers was 3.5 g/cm$^3$.

The configurations of the respective positive electrodes are summarized in Table 1.

[Table 1]

| | first particle group (D1 = 14 μm) | | second particle group (D2 = 4 μm) | | mixing ratio | carbon conductive agent | binder | dispersant (D) | active material density |
|---|---|---|---|---|---|---|---|---|---|
| | composition | F1 (MPa) | composition | F2 (MPa) | first/second | composition · adding amount | composition · adding amount | composition | (g/cm³) |
| A1 | NCM=90/5/5 | 180 | NCM = 85/10/5 | 190 | 80/20 | MWCTs (AD 10 nm) adding amount 0.5% | PVDF (MW 1,300,000) adding amount 1% | HNBR/eC/PVP | 3.5 |
| A2 | NCM=90/5/5 | 180 | NCM = 85/10/5 | 190 | 80/20 | MWCTs (AD 10 nm) adding amount 0.5% | PVDF (MW 1,300,000) adding amount 1% | HNBR/eC/PVP | 3.6 |
| A3 | NCM=90/5/5 | 180 | NCM = 85/10/5 | 190 | 80/20 | MWCTs (AD 10 nm) adding amount 0.5% | PVDF (MW 1,300,000) adding amount 1% | HNBR | 3.5 |
| A4 | NCM=90/5/5 | 180 | NCM = 85/10/5 | 190 | 80/20 | AB acetylene black adding amount 1.5% | PVDF (MW 1,300,000) adding amount 1% | HNBR | 3.5 |
| A5 | NCM=90/5/5 | 180 | NCM = 85/10/5 | 190 | 80/20 | AB acetylene black adding amount 1.5% | PVDF (MW 1,000,000) adding amount 1% | HNBR | 3.5 |
| B1 | NCM=90/5/5 | 180 | NCA = 85/10/5 | 120 | 80/20 | MWCTs (AD 10 nm) adding amount 0.5% | PVDF (MW 1,300,000) adding amount 1% | HNBR/eC/PVP | 3.6 |
| B2 | NCM=90/5/5 | 180 | NCM = 85/10/5 | 190 | 80/20 | MWCTs (AD 10 nm) adding amount 0.5% | PVDF (MW 1,300,000) adding amount 1% | PVP | 3.5 |
| B3 | NCM=90/5/5 | 180 | NCM = 85/10/5 | 190 | 80/20 | MWCTs (AD 10 nm) adding amount 0.5% | PVDF (MW 1,300,000) adding amount 1% | eC | 3.5 |

[Evaluation]

<Liquid absorption performance (pore diameter)>

A test piece weighing 2 g was cut out from the produced positive electrode, and subjected to measurement for a pore diameter (size of the pores in the electrode plate through which the electrolyte solution can pass) distribution in the electrode plate, using AutoPore V9620 (Shimadzu Corporation - manufactured by Micromeritics Instrument Corporation). With the measurement range set to the pore diameters of approximately 0.003 μm to 100 μm, the pore mode diameter was calculated from the entire measurement range.

<Electrode plate resistance>

One square test piece measuring 5cm × 5cm was punched out from the produced positive electrode, and subjected to measurement for a mixture layer resistance and an interfacial resistance, using an electric resistance measurement system RM2610 manufactured by Hioki E.E. Corporation. The mixture layer resistance at this time was determined as an electrode plate resistance.

<Charge capacity>

With respect to the fabricated batteries, in an environment at a temperature of 25 °C, a constant-current charge was performed at a constant current of 0.2It until the voltage reached 4.2 V, followed by a constant-voltage charge performed at 4.2 V until the current value reached 1/50It, and then, a constant-current discharge was performed at a constant current of 0.2It until the voltage reached 2.5 V. The above operation was repeated twice in total, to confirm the capacity.

<Safety (ARC)>

With respect to the fabricated batteries, in an environment at a temperature of 25 °C, a constant-current charge was performed at a constant current of 0.2It until the voltage reached 4.2 V, followed by a constant-voltage charge performed at 4.2 V until the current value reached 1/50It. Then, a 0.9-mmφ nail was pierced into the secondary battery at a speed of 1 mm/sec, forcing to cause a short circuit. From the battery surface temperature increase rate at this time, the reciprocal of a heat generation rate [W] was calculated.

<Rapid-charge cycle characteristic>

With respect to the fabricated batteries, in an environment at a temperature of 25 °C, a constant-current charge was performed at a constant current of 0.7It until the voltage reached 4.2 V, followed by a constant-voltage charge performed at 4.2 V until the current value reached 1/50It, and then, a constant-current discharge was performed at a constant current of 1.0It until the voltage reached 2.5 V. The above operation was repeated 200 times in total, to confirm the capacity retention rate relative to the initial capacity.

The results are shown in Table 2. Note that the battery evaluation results (except the liquid absorption performance) are relative values, with the results of the battery A1 taken as 100.

[Table 2]

|  | electrode plate physical property | electrode plate physical property (index) | battery characteristics (index) | | |
|---|---|---|---|---|---|
|  | liquid absorption performance (pore diameter) (μm) | electrode plate resistance | charge capacity | safety | rapid-charge cycle characteristic |
| A1 | 0.5 | 100 | 100 | 100 | 100 |
| A2 | 0.5 | 99 | 100 | 100 | 102 |
| A3 | 0.5 | 101 | 100 | 100 | 100 |
| A4 | 0.3 | 129 | 100 | 100 | 99 |
| A5 | 0.3 | 131 | 100 | 100 | 99 |
| B1 | 0.3 | 179 | 100 | 99 | 95 |

(continued)

|  | electrode plate physical property | electrode plate physical property (index) | battery characteristics (index) | | |
|---|---|---|---|---|---|
|  | liquid absorption performance (pore diameter) ($\mu$m) | electrode plate resistance | charge capacity | safety | rapid-charge cycle characteristic |
| B2 | 0.5 | 186 | 99 | 98 | 94 |
| B3 | 0.5 | 199 | 98 | 98 | 93 |

The positive electrode of the battery A1 in Example 1 showed excellent liquid absorption performance (large pore diameter), low electrode plate resistance, and favorable battery characteristics. The results reflect the contribution of the improved dispersibility of the positive electrode mixture. The results also reflect the contribution of suppressed cracking of the active material particles achieved by setting to F1 < F2. Furthermore, in the battery A2 of Example 2, despite the increased active material density, the electrode plate resistance was further reduced, and the rapid-charge cycle characteristic was improved.

The positive electrode of the battery A3 of Example 3 showed a slight increase in electrode plate resistance, but exhibited roughly good results. The battery A4 of Example 4 and the battery A5 of Example 5 showed reduced liquid absorption performance, increased plate resistance, and lowered battery characteristics, but exhibited more favorable results than those of the batteries B1 to B3 of Comparative Examples 1 to 3. The results of the battery B1 are related to the setting to F1 > F2. Presumably, cracking of the active material particles occurred, which decreased the flow paths of the electrolyte solution, resulting in lowered rapid-charge cycle characteristic.

On the other hand, in the battery B2 of Comparative Example 2, in which only polyvinylpyrrolidone was used as the dispersant, and the battery B3 of Comparative Example 3, in which only ethyl cellulose was used as the dispersant, the dispersibility of the positive electrode mixture was reduced, and the electrode plate resistance of the positive electrode was increased, which presumably resulted in lowered rapid-charge cycle characteristic.

[Industrial Applicability]

A secondary battery including the high-capacity, high-performance positive electrode for secondary batteries according to the present disclosure is useful as a main power source for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

10      secondary battery
11      sealing assembly
12      valve body
13      metal plate
14      insulating member
15      positive electrode
15L     positive electrode lead
16      negative electrode
16b     negative electrode current collector
16D     end portion on winding-finish side
16L     negative electrode lead
17      separator

**Claims**

1. A positive electrode for secondary batteries, comprising:

a positive electrode current collector; and a positive electrode mixture layer disposed on a surface of the positive electrode current collector, wherein

the positive electrode mixture layer contains a positive electrode active material, a carbon conductive agent, and a dispersant,

the positive electrode active material includes a first metal composite oxide having a first particle size distribution, and a second composite metal oxide having a second particle size distribution,

a volume-based median diameter D1 of the first metal composite oxide and a volume-based median diameter D2 of the second metal composite oxide satisfy D1 > D2,

a compressive strength F1 of particles of the first metal composite oxide and a compressive strength F2 of particles of the second composite oxide satisfy F1 < F2, and

the dispersant includes a nitrile group-containing rubber.

2. The positive electrode for secondary batteries according to claim 1, wherein

the first metal composite oxide and the second metal composite oxide are each independently represented by a general formula: $Li_yNi_xM_{(1-x)}O_2$,

the general formula satisfies $0.8 \leq x$ and $0 < y \leq 1.2$, and

the M is at least one element selected from the group consisting of Co, Mn, Al, Fe, Zr, Ti, Sr, Ca, and B.

3. The positive electrode for secondary batteries according to claim 2, wherein the general formula satisfies $0.85 \leq x$.

4. The positive electrode for secondary batteries according to claim 1, wherein

the first particle size distribution satisfies $8 \leq D1\ (\mu m) \leq 30$, and

the second particle size distribution satisfies $1 \leq D2\ (\mu m) \leq 10$.

5. The positive electrode for secondary batteries according to claim 1, wherein the positive electrode mixture layer further contains a vinylidene fluoride-based resin.

6. The positive electrode for secondary batteries according to claim 5, wherein a weight-average molecular weight of the vinylidene fluoride-based resin is 1,000,000 or more.

7. The positive electrode for secondary batteries according to claim 1, wherein the dispersant further includes a polyvinylpyrrolidone resin and a cellulose resin.

8. The positive electrode for secondary batteries according to claim 1, wherein the carbon conductive agent includes carbon nanotubes.

9. The positive electrode for secondary batteries according to claim 8, wherein a diameter of the carbon nanotubes is 20 nm or less.

10. A secondary battery, comprising:

the positive electrode for secondary batteries according to any one of claims 1 to 9;

a separator; a negative electrode facing the positive electrode with the separator interposed between the positive electrode and the negative electrode; and an electrolyte solution.

FIG. 1

## INTERNATIONAL SEARCH REPORT

| International application No. |
|---|
| **PCT/JP2024/019703** |

### A. CLASSIFICATION OF SUBJECT MATTER

***H01M 4/131***(2010.01)i; ***H01M 4/36***(2006.01)i; ***H01M 4/62***(2006.01)i; ***H01M 4/505***(2010.01)i; ***H01M 4/525***(2010.01)i; ***H01M 10/052***(2010.01)i; ***H01M 10/0566***(2010.01)i

FI:   H01M4/131; H01M4/36 D; H01M4/505; H01M4/525; H01M4/62 Z; H01M10/052; H01M10/0566

According to International Patent Classification (IPC) or to both national classification and IPC

### B. FIELDS SEARCHED

Minimum documentation searched (classification system followed by classification symbols)

H01M4/131; H01M4/36; H01M4/62; H01M4/505; H01M4/525; H01M10/052; H01M10/0566

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2023/054308 A1 (PANASONIC INTELLECTUAL PROPERTY MANAGEMENT CO., LTD.) 06 April 2023 (2023-04-06)<br>paragraphs [0112]-[0126], [0128], [0139], example 3, table 1 | 1-10 |
| Y | KR 10-2021-0019389 A (LG CHEM, LTD.) 22 February 2021 (2021-02-22)<br>paragraphs [0064], [0138]-[0142], [0173]-[0174], [0177], table 1 | 1-2, 4-8, 10 |
| Y | WO 2022/210902 A1 (PANASONIC INTELLECTUAL PROPERTY MANAGEMENT CO., LTD.) 06 October 2022 (2022-10-06)<br>paragraphs [0051]-[0059], table 1 | 1-10 |
| Y | JP 2015-043257 A (PANASONIC CORPORATION) 05 March 2015 (2015-03-05)<br>paragraphs [0029], [0039], example 1 | 6 |
| A | WO 2021/153397 A1 (PANASONIC INTELLECTUAL PROPERTY MANAGEMENT CO., LTD.) 05 August 2021 (2021-08-05)<br>example 1 | 1-10 |

[✓] Further documents are listed in the continuation of Box C.      [✓] See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| | International application No. |
|---|---|
| | **PCT/JP2024/019703** |

### C. DOCUMENTS CONSIDERED TO BE RELEVANT

| Category* | Citation of document, with indication, where appropriate, of the relevant passages | Relevant to claim No. |
|---|---|---|
| P, A | WO 2024/070704 A1 (PANASONIC INTELLECTUAL PROPERTY MANAGEMENT CO., LTD.) 04 April 2024 (2024-04-04)<br>paragraphs [0076]-[0089], examples | 1-10 |

Form PCT/ISA/210 (second sheet) (July 2022)

### INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| WO | 2023/054308 | A1 | 06 April 2023 | CN | 118020183 | A | |
| KR | 10-2021-0019389 | A | 22 February 2021 | US | 2022/0140320 | A1 | |
| | | | | paragraphs [0051], [0098]-[0100], [0116]-[0117], [0119], table 1 | | | |
| | | | | WO | 2021/029652 | A1 | |
| | | | | CN | 113474912 | A | |
| WO | 2022/210902 | A1 | 06 October 2022 | EP | 4318651 | A1 | |
| | | | | paragraphs [0052]-[0059], table 1 | | | |
| | | | | CN | 117121224 | A | |
| JP | 2015-043257 | A | 05 March 2015 | WO | 2013/094100 | A1 | |
| | | | | paragraphs [0063]-[0064], [0091], example 1 | | | |
| WO | 2021/153397 | A1 | 05 August 2021 | US | 2023/0047021 | A1 | |
| | | | | example 1 | | | |
| | | | | EP | 4099422 | A1 | |
| | | | | CN | 115053360 | A | |
| WO | 2024/070704 | A1 | 04 April 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023090332 A

- JP 5868604 B